# EUROPEAN PATENT APPLICATION

(11) **EP 4 372 266 A1**
(43) Date of publication of application: **22.05.2024**
(21) Application number: 23202324.2
(22) Date of filing: 09.10.2023
(51) Int. Cl.: F17C 13/12

(54) **STORAGE MODULE**

(30) Priority: 21.11.2022 JP 2022185618
(71) Applicant: TOYOTA JIDOSHA KABUSHIKI KAISHA, Toyota-shi, Aichi-ken, 471-8571 (JP)
(72) Inventor: SATOYA, Daisuke, Toyota-shi, 471-8571 (JP); YAHASHI, Hiroki, Toyota-shi, 471-8571 (JP)
(74) Representative: J A Kemp LLP

(57) **Abstract**

A storage module including a tank (12) includes: a filling port (21) configured to fill the tank (12) with gas, a supply port (31) configured to supply gas from the tank (12) to a supply destination a release port (41) configured to release gas from the tank (12), a first channel (23) that is a channel connecting the tank (12) and the filling port (21), a second channel (33) that is a channel connecting the tank (12) and the supply port (31), and a release channel (42, 43) that is a channel connecting at least one of the first channel (23), the second channel (33), and the tank (12), to the release port (41).

## Description

### BACKGROUND OF THE INVENTION

### 1. Field of the Invention

The present disclosure relates to a storage module.

### 2. Description of Related Art

Japanese Unexamined Patent Application Publication No. 2005-121173 (JP 2005-121173 A) discloses a storage unit in which a plurality of tanks is disposed in a case.

### SUMMARY OF THE INVENTION

In a storage module according to the related art, such as in JP 2005-121173 A, it is conceivable that a case in which hydrogen tanks are disposed will be handled alone, in a state of not yet being connected to a hydrogen supply destination.
On the other hand, conventional storage modules are intended to handle stored hydrogen in a state of being connected to a supply destination, and accordingly when there is a need to discharge hydrogen from the storage module for some reason, hydrogen may be discharged in situations of the storage module being handled alone, or when the storage module is in a state of being attached to the supply destination and suppressing effects on the supply destination is desired.

The present disclosure provides a storage module that can appropriately discharge gas from itself as necessary.

The present application relates to a storage module including a tank, the storage module including a filling port configured to fill the tank with gas, a supply port configured to supply gas from the tank to a supply destination, a release port configured to release gas from the tank, a first channel that is a channel connecting the tank and the filling port, a second channel that is a channel connecting the tank and the supply port, and a release channel that is a channel connecting at least one of the first channel, the second channel, and the tank, to the release port.

In the above storage module, the release channel may be connected to a safety valve (pressure relief device (PRD)) provided to the first channel, the second channel, or the tank.

In the above storage module, the release channel may be connected to at least the second channel. The storage module may further include a first solenoid valve provided between a connection portion of the second channel to the release channel and the supply port, a second solenoid valve provided on the release channel connected to the second channel, and a control device that controls opening and closing of the first solenoid valve and the second solenoid valve. The control device may be configured to acquire pressure between the tank and the first solenoid valve in a state in which the first solenoid valve and the second solenoid valve are closed. The control device may be configured to perform control to, following acquiring temporal change of the pressure, transition the second solenoid valve to an open state and release gas from the release port.

In the above storage module, the first channel, the second channel and the release channel may be housed on an inner side of a housing. The filling port, the supply port, and the release port may be provided on a wall portion of the housing. An extension pipe that is piping extending from the housing may be disposed at the release port.

According to the present disclosure, even when at least part of the gas needs to be discharged from the storage module for some reason, the storage module itself can do so, which is highly convenient, and the location to which discharging is to be performed can be adjusted in accordance with the circumstances of the connection destination.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a configuration of a storage module; and
FIG. 2 is a diagram illustrating a control device.

### DETAILED DESCRIPTION OF EMBODIMENTS

### 1. Storage Module

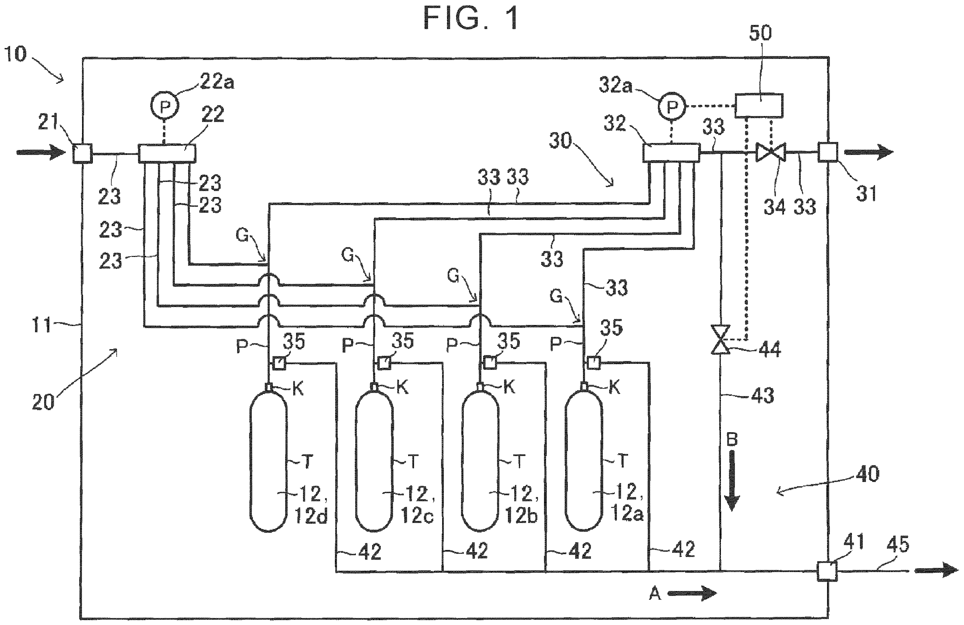

FIG. 1 conceptually illustrates a configuration of a storage module 10 according to an embodiment. Such a storage module 10 includes a plurality of tanks 12 in which hydrogen to be used for electric power generation by a fuel cell can be stored, for example. The present embodiment shows an example in which hydrogen is an object of storage. In this case, after the tanks 12 of the storage module 10 are filled with hydrogen at hydrogen filling equipment called a hydrogen station or the like, the storage module 10 is transported by a truck or the like to a hydrogen supply destination (equipment for generating electric power using fuel cells) and connected. Examples of the supply destination include ships, stationary electric power generation facilities installed in factory facilities and so forth, construction machinery, heavy trucks, and the like, but not limited thereto in particular. That is to say, the storage module 10 is a module that is used by being transported between a gas filling location and a gas usage location (supply destination) that are away from each other.

As can be seen from FIG. 1, according to the present embodiment, the storage module 10 includes the tanks 12, a filling system path 20 for filling the tanks 12 with hydrogen, a supply system path 30 for feeding hydrogen from the tanks 12 to the supply destination, safety valves 35, a release system path 40 for releasing gas, and a control device 50. Further, these are disposed in a housing 11 that is like a box. Being provided in the housing 11 and being modularized facilitates handling such as transportation and so forth.

### 1.1. Tank

The tanks 12 are containers for storing hydrogen and are disposed on an inner side of the housing 11. The specific structure of the tank 12 is not limited in particular, and a known arrangement that can be used as a tank can be applied. Typically, a tank includes a tank body T that is a portion for storing hydrogen, and a valve K that serves as a hydrogen inlet and outlet of the tank body T and to which piping is connected.
The allowable pressure of the tank 12 is not limited in particular, but from the perspective of supplying a greater amount of hydrogen, a tank capable of storing hydrogen at an allowable pressure of more than 20 MPa and 70 MPa or less can be used.

In the present embodiment, multiple tanks 12 are provided (e.g., four), and each tank 12 is filled with hydrogen. The present embodiment illustrates an example in which four tanks 12 are disposed, and these are denoted by signs 12a, 12b, 12c, and 12d, for the purpose of distinguishing one from another. These tanks 12 may all have the same capacity, or may include tanks with different capacities.

Also, the form of disposing each tank 12 is not limited in particular, but in the present embodiment, the four tanks 12 are accommodated in the box-like member all in an erected state (with the valves K facing upward) and thus disposed on the inner side of the housing 11.

### 1.2. Filling System Path

The filling system path 20 is a path at least partially disposed on the inner side of the housing 11 and connected to hydrogen filling equipment, for filling the tanks 12 with hydrogen. The filling system path 20 includes a filling connector 21, a distributor 22, and piping 23 to this end.

### 1.2.1. Filling Connector

The filling connector 21 has a hydrogen filling port to which a nozzle of the hydrogen filling equipment is connected, such that a channel between the hydrogen filling equipment and the storage module 10 communicates, and hydrogen flows from the hydrogen filling equipment to the tank 12. The specific form of this filling connector 21 is not limited in particular, and a known arrangement can be used (also referred to as a receptacle).
Note that in the present embodiment, the filling connector 21 is disposed on an outer wall of the housing 11, and is partially exposed to the outside. This facilitates connection of the nozzle of the hydrogen filling equipment to the filling connector 21.

### 1.2.2. Distributor

In the present embodiment, the distributor 22 is disposed on the inner side of the housing 11 and is provided on the piping 23 connecting the filling connector 21 and the tank 12, and is a member that branches the piping 23 from the filling connector 21 into piping 23 to each tank 12. In the present embodiment, a single line of piping 23 from the filling connector 21 is branched into the piping 23 to each of the four tanks 12. However, this is not limiting, and a configuration may be made in which a plurality of the distributors 22 is combined to enable obtaining of desired branching. The specific form of the distributor 22 is not limited in particular, and a known arrangement can be used.

In the present embodiment, the distributor 22 is provided with a pressure gauge 22a that is connected to a channel provided to the distributor 22, and that measures pressure within the channel.

### 1.2.3. Piping

The piping 23 is piping that makes up a first channel disposed on the inner side of the housing 11, and is piping that forms channels connecting the filling connector 21 and the tanks 12 via the distributor 22, as described above. Also, a solenoid valve, a check valve, or the like may be disposed on the piping 23 as necessary. Further, the piping 23 may be provided with a sensor so that the internal pressure and temperature can be measured.

### 1.3. Supply System Path

The supply system path 30 is a path at least partially disposed on the inner side of the housing 11, and is a path that is connected to a supply destination, for supplying hydrogen from the tanks 12 to the supply destination. Accordingly, the supply system path 30 includes a supply connector 31, a distributor 32, piping 33, and a solenoid valve 34. 1.3.1. Supply Connector

The supply connector 31 is provided with a hydrogen supply port to which a connector of a supply destination is connected, such that a channel between the storage module 10 and the supply destination communicates, and hydrogen flows from the tanks 12 to the supply destination. The specific form of such a supply connector 31 is not limited in particular, and a known arrangement can be used. Note that in the present embodiment, the supply connector 31 is disposed on the outer wall of the housing 11, and is partially exposed to the outside. This facilitates connection of the connector of the supply destination.

### 1.3.2. Distributor

In the present embodiment, the distributor 32 is disposed on the inner side of the housing 11 and is provided on the piping 33 connecting the supply connector 31 and the tanks 12, and is a member that merges the piping 33 from the tanks 12 into a single line of piping 33 to the supply connector 31. In the present embodiment, the piping 33 from the four tanks 12 merges to form a single line of piping 33 leading to the supply connector 31. However, this is not limiting, and a configuration may be made in which a plurality of the distributors 32 is combined to enable obtaining of desired merging. The specific form of the distributor 32 is not limited in particular, and a known arrangement can be used.

In the present embodiment, the distributor 32 is provided with a pressure sensor 32a that is connected to a channel provided to the distributor 32, and that measures pressure within the channel. Now, the pressure sensor 32a according to the present embodiment is electrically connected to the control device 50 to provide the control device 50 with pressure information.

### 1.3.3. Piping

The piping 33 is piping that makes up a second channel disposed on the inner side of the housing 11, and is piping that forms channels connecting the tanks 12 and the supply connector 31 via the distributor 32, as described above. Also, a solenoid valve, a check valve, or the like may be disposed on the piping 33 as necessary. Further, the piping 33 may be provided with a sensor so that the internal pressure and temperature can be measured.

Also, in the present embodiment, the piping 33 is connected to the piping 23 at portions near the tanks 12 (merging portions G in FIG. 1) to form single lines of piping P that are connected to the tanks 12. Accordingly, in the present embodiment, the piping P between the merging portions G and the valves K of the tanks 12 is piping that doubles as the piping 23 and the piping 33, with the piping P functioning as the piping 23 as well as the piping 33. In the present specification, when considering the piping 23, the portion of the piping P is also included therein, and when considering the piping 33, the portion of the piping P is also included therein. Note that in the present embodiment, the merging portions G are positioned between the distributors 22 and 32 and the valves K of the tanks 12, and are disposed to be closer to the tanks 12 than the distributor 32 and the solenoid valve 34. However, the piping 23 and the piping 33 do not necessarily have to merge as in the present embodiment, and the piping 23 and the piping 33 may be respectively connected to the valves K without merging.

### 1.3.4. Solenoid Valve

The solenoid valve 34 functions as a first solenoid valve, is a valve that can be quickly opened and closed by the force of an electromagnet, and is an on/off valve that is either fully opened (open state) or fully closed (closed state). A known arrangement can be used as the solenoid valve 34. In the present embodiment, the solenoid valve 34 is disposed on the inner side of the housing 11, provided on the piping 33 between the distributor 32 and the supply connector 31, and is electrically connected to the control device 50 so that the control device 50 controls opening and closing.

### 1.4. Safety Valve

The safety valves 35 are valves that are in a normally closed state, but automatically go to an open state when the pressure inside the piping exceeds a predetermined value, to release gas and keep pressure from rising any further. The specific form of the safety valves 35 is not limited in particular, and a known arrangement can be used. In the present embodiment, the safety valves 35 are disposed on the inner side of the housing 11, and provided on the piping P serving as both the piping 23 and the piping 33, between the merging portions G of the piping 23 and the piping 33, and the valves K. However, the positions of the safety valves 35 are not limited to this, and the safety valves 35 may be provided to the valves K of the tanks 12, may be provided on either one or the other of the piping 23 and the piping 33 at portions where the piping 23 and the piping 33 are not merged (portions that are not the piping P), or may be provided on both of the piping 23 and the piping 33.

### 1.5. Release System Path

The release system path 40 is a path that is at least partially disposed on the inner side of the housing 11, and is a path for directly releasing gas to the outside from the storage module 10 for some reason (a specific example will be shown later), without supplying the gas to the supply destination. Accordingly, in the present embodiment, the release system path 40 includes a release connector 41, first release piping 42, second release piping 43, a solenoid valve 44, and an extension pipe 45.

### 1.5.1. Release Connector

The release connector 41 includes a release port that enables release of gas from the storage module 10 to the outside through the extension pipe 45 that is connected thereto for releasing gas to the outside. Note that in the present embodiment, the release connector 41 is disposed on the outer wall of the housing 11, and is partially exposed to the outside. This facilitates connection of the extension pipe 45 corresponding to various forms of the extension pipe 45 depending on the supply destination.

### 1.5.2. First Release Piping

The first release piping 42 (hereinafter, also referred to as "piping 42") is disposed on the inner side of the housing 11, and is piping that forms, out of release channels, a channel for releasing gas to the outside, when the safety valves 35 go to an open state in an emergency, such as in the event of a fire or the like. Accordingly, the piping 42 thus connects the safety valves 35 and the release connector 41.

### 1.5.3. Second Release Piping

The second release piping 43 (hereinafter, also referred to as "piping 43") is disposed on the inner side of the housing 11, and is piping that forms, out of the release channels, a channel for releasing gas to the outside after an internal leak inspection is completed. Accordingly, in the present embodiment, the piping 43 has one end thereof connected to the piping 33 between the distributor 32 and the solenoid valve 34, and the other end thereof connected to the release connector 41.

### 1.5.4. Solenoid Valve

The solenoid valve 44 functions as a second solenoid valve, is a valve that can be quickly opened and closed by the force of an electromagnet, and is an on/off valve that can be in either state of being fully opened (open state) or fully closed (closed state). A known arrangement can be used as the solenoid valve 44. In the present embodiment, the solenoid valve 44 is disposed on the inner side of the housing 11, provided on the piping 43, and is electrically connected to the control device 50 so that the control device 50 controls opening and closing.

### 1.5.5. Extension Pipe

The extension pipe 45 is piping disposed such that one end thereof is connected to the release connector 41 and extends outward from the housing 11, and the other end thereof is open to the outside. Thus, gas from the release connector 41 is guided to the outside. The extension pipe 45 can form a channel in accordance with the form of the supply destination, and can be flexibly applied by forming a necessary channel in accordance with the circumstances at the supply destination.

### 1.5.6 Others

Alternatively, an orifice may be disposed on the release system path 40, on the piping 43 between the solenoid valve 44 and the release connector 41. Accordingly, the flow rate of the gas flowing through the piping 43 can be adjusted. For example, when there are restrictions on space to which releasing is to be performed, or on exhaust capabilities of the at the supply destination, the flow rate of the gas flowing through the piping 43 is adjusted according to these restrictions. Further, a configuration equivalent to the second release piping 43 and the second solenoid valve 44 may be further applied to the filling system path 20 in addition to the release system path 40. In this case, a solenoid valve corresponding to the first solenoid valve 34 can be provided on the piping 23 between the filling connector 21 and the distributor 22.

### 1.6. Control Device

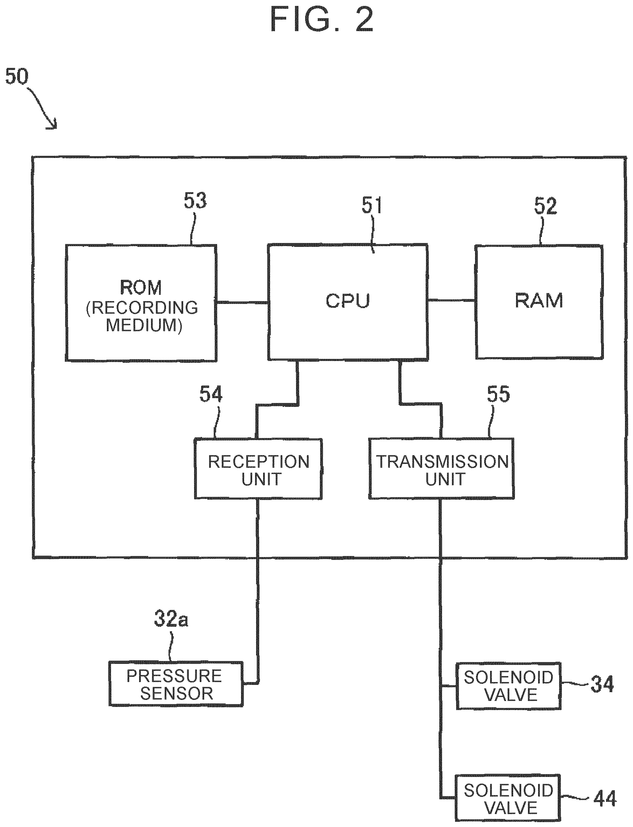

The control device 50 acquires information from the pressure sensor 32a and performs computation, and also operates the solenoid valves 34 and 44 to perform control so that gas is released in a desired way. As conceptually illustrated in FIG. 2, the control device 50 includes a central processing unit (CPU) 51 that is a processor and performs calculations, random-access memory (RAM) 52 that functions as a work area, read-only memory (ROM) 53 that functions as a recording medium, a reception unit 54 that is an interface through which the control device 50 receives information either wired or wirelessly, and a transmission unit 55 that is an interface through which the control device 50 externally sends information either wired or wirelessly. Accordingly, the control device 50 is configured such that the pressure sensor 32a is connected to the reception unit 54 and the control device 50 can receive information therefrom, and the solenoid valve 34 and the solenoid valve 44 are connected to the transmission unit 55 and the control device 50 can transmit opening and closing signals thereto. In addition, an image display device and a speaker for externally annunciating the computation results may be provided.

The control device 50 has saved therein a program for processing information from the pressure sensor 32a to determine opening/closing of the solenoid valve 34 and the solenoid valve 44 and to perform operations thereof. In the control device 50, the CPU 51, the RAM 52, and the ROM 53 that serve as hardware resources operate cooperatively with the program. Specifically, the CPU 51 executes the computer program recorded in the ROM 53 in the RAM 52 functioning as a work area, thereby operating the solenoid valve 34 and the solenoid valve 44 and realizing appropriate release of gas. Information that is acquired or generated by the CPU 51 is stored in the RAM 52. Further, a separate recording medium may be provided within the control device 50, or externally therefrom, with programs and various types of data recorded therein. Examples of specific forms of gas release will be described later.

Such a control device 50 can typically be made up of a computer, and is disposed on the inner side of the housing 11.

### 2. Hydrogen Filling, Hydrogen Supply

Filling the tanks 12 with hydrogen using the filling system path 20 is as known. The nozzle of the hydrogen filling equipment is connected to the filling connector 21 of the storage module 10, and each tank 12 is filled with hydrogen from the filling connector 21 through the distributor 22 via the piping 23.

Supplying hydrogen from the tanks 12 to the supply destination using the supply system path 30 is as known. A connector of the supply equipment is connected to the supply connector 31, and hydrogen is supplied from the tanks 12 to the supply destination through the distributor 32 and the solenoid valve 34 in the open state, via the piping 33. Note that at this time, the solenoid valve 44 is in a closed state.

### 3. Release

External release of hydrogen from the release system path 40 can be performed when the situation arises, and first to third modifications will be described here.

### 3.1. First Modification

The first modification relates to release of hydrogen by operating the safety valves 35. When the internal pressure of the tank 12, the piping 33, or the like rises as a result of temperature rising due to a fire or the like, the safety valves 35 operate to reduce the internal pressure, thereby releasing hydrogen. In the present embodiment, the piping 42 is connected to the safety valves 35, and accordingly the hydrogen released from the safety valves 35 flows through the piping 42 and the extension pipe 45 via the release connector 41, as indicated by the arrow A in FIG. 1, and is externally released.

In a conventional configuration, the hydrogen released from safety valves is only discharged from the tanks 12, and is externally discharged through a hole provided in the wall of the housing encompassing the tanks, for example, and accordingly depending on the structural form of the supply destination where the storage module is disposed, there is a risk that the discharged hydrogen will accumulate in an inappropriate location. On the other hand, according to the present embodiment, the discharged hydrogen is guided through the piping 42, and the extension pipe 45 enables release of the hydrogen to a final location taking into consideration the circumstances of the supply destination. Moreover, such hydrogen release can be performed by the storage module alone.

### 3.2. Second Modification

The second modification relates to hydrogen discharge after completion of a leak inspection. Specifically, the leak inspection is performed in accordance with the following procedures (1) to (5). It should be noted that each of the following procedures can be automatically carried out by a program saved in the control device 50.
(1) The valves K provided to the tanks 12 are placed in a closed state. These valves K are also electrically connected to the control device 50, and opening and closing thereof is controlled by the control device 50.
(2) The solenoid valve 34 is placed in a closed state, and the solenoid valve 44 in an open state. Accordingly, the piping 33 between the tanks 12 and the solenoid valve 34 communicates externally through the piping 43, the release connector 41, and the extension pipe 45, and the internal pressure thereof becomes generally the same as the ambient air pressure.
(3) The solenoid valve 44 is placed in a closed state. Accordingly, inside of the piping 33 between the tanks 12 and the solenoid valve 34 is isolated from the outside.
(4) Transition of readings of the pressure sensor 32a is acquired for a predetermined period of time. Now, when there is leakage from the valves K to the piping 33 even though the valves K provided to the tanks 12 are in a closed state, the pressure in the piping 33 will rise and be manifested in the readings of the pressure sensor 32a. When the pressure rise is no less than a level that is set in advance, annunciation is made that there is leakage. On the other hand, when there is no pressure rise, or any rise in pressure is less than the level of pressure rise that is set in advance, annunciation is made that there is no leakage.
(5) The solenoid valve 44 is placed in an open state. Accordingly, the hydrogen that has flowed into the piping 33 during (4) can be externally discharged from the extension pipe 45 via the release connector 41, as indicated by arrow B in FIG. 1.

This sort of leak inspection and hydrogen discharge can be automatically performed by the control device 50. By setting the timing for performing the leak inspection in advance, the leak inspection is started at this timing and is performed in accordance with the program saved in the control device 50. Note that instead of or in addition to this, a configuration may be made in which a person instructs only the start of the leak inspection by a switch or the like, and thereafter the leak inspection is automatically performed. This allows leak inspection to be performed at any timing when necessary.

Conventionally, discharge of hydrogen is performed by the supply destination after the leak inspection is performed, and accordingly the storage module 10 cannot perform the leak inspection alone, or the supply destination needs to be operated, which is troublesome. Conversely, according to the present embodiment, the storage module 10 itself can independently perform leak inspection and can complete up through discharging, and accordingly convenience can be improved.

### 3.3. Third Modification

The third modification relates to hydrogen discharge after completion of the leak inspection, and is performed in a different way from that of the second modification. Specifically, the leak inspection is performed in accordance with the following procedures (11) to (14). It should be noted that each of the following procedures can be automatically carried out by a program saved in the control device 50.

(11) The valves K provided to the tanks 12, the solenoid valve 34, and the solenoid valve 44 are in a closed state. Accordingly, inside of the piping 33 between the tanks 12 and the solenoid valve 34 is isolated from the outside.
(12) The valves K provided to the tanks 12 are placed in an opened state for a predetermined period of time, and thereafter are placed in a closed state after this period of time has elapsed. Thus, hydrogen flows from the tanks 12 into the piping 33 between the tanks 12 and the solenoid valve 34, and the internal pressure thereof rises.
(13) Transition of readings of the pressure sensor 32a is acquired for a predetermined period of time. Now, the pressure will drop when there is a leak at the solenoid valve 34 and/or the solenoid valve 44, and accordingly when the pressure drop is no less than a level that is set in advance, annunciation is made that there is leakage. On the other hand, when there is no pressure drop, or any drop in pressure is less than the level of pressure drop that is set in advance, annunciation is made that there is no leakage.
(14) The solenoid valve 44 is placed in an open state. Accordingly, the hydrogen that has flowed into the piping 33 during (12) can be externally discharged from the extension pipe 45 via the release connector 41, as indicated by arrow B in FIG. 1.

This sort of leak inspection and hydrogen discharge can be automatically performed by the control device 50. By setting the timing for performing the leak inspection in advance, the leak inspection is started at this timing and is performed in accordance with the program saved in the control device 50. Note that instead of or in addition to this, a configuration may be made in which a person instructs only the start of the leak inspection by a switch or the like, and thereafter the leak inspection is automatically performed. This allows leak inspection to be performed at any timing when necessary.

Conventionally, discharge of hydrogen is performed by the supply destination after the leak inspection is performed, and accordingly the storage module 10 cannot perform the leak inspection alone, or the supply destination needs to be operated, which is troublesome. Conversely, according to the present embodiment, the storage module 10 itself can independently perform leak inspection and can complete up through discharging, and accordingly convenience can be improved.

## Claims

1. A storage module (10) including a tank (12), the storage module (10) comprising:
a filling port (21) configured to fill the tank (12) with gas;
a supply port (31) configured to supply gas from the tank (12) to a supply destination;
a release port (41) configured to release gas from the tank (12);
a first channel (23) that is a channel connecting the tank (12) and the filling port (21);
a second channel (33) that is a channel connecting the tank (12) and the supply port (31); and
a release channel (42, 43) that is a channel connecting at least one of the first channel (23), the second channel (33), and the tank (12), to the release port (41).

2. The storage module (10) according to claim 1, wherein the release channel (42, 43) is connected to a safety valve (35) that is provided to the first channel (23), the second channel (33), or the tank (12).

3. The storage module (10) according to claim 1, wherein:
the release channel (42, 43) is connected to at least the second channel (33);
the storage module (10) further includes:
a first solenoid valve (34) provided between a connection portion of the second channel (33) to the release channel (42, 43) and the supply port (31),
a second solenoid valve (44) provided on the release channel (42, 43) connected to the second channel (33), and
a control device (50) that is configured to control opening and closing of the first solenoid valve (34) and the second solenoid valve (44); and
the control device (50) is configured to:
acquire pressure between the tank (12) and the first solenoid valve (34) in a state in which the first solenoid valve (34) and the second solenoid valve (44) are closed, and
perform control to, following acquiring temporal change of the pressure, transition the second solenoid valve (44) to an open state and release gas from the release port (41).

4. The storage module (10) according to any one of claims 1 to 3, wherein:
the first channel (23), the second channel (33) and the release channel (42, 43) are housed on an inner side of a housing (11);
the filling port (21), the supply port (31), and the release port (41) are provided on a surface of the housing (11); and
an extension pipe (45) that is piping extending from the housing (11) is disposed at the release port (41).
